# EUROPÄISCHE PATENTSCHRIFT

(11) **EP 3 745 490 B1**
(45) Veröffentlichungstag und Bekanntmachung des Hinweises auf die Patenterteilung: **20.03.2024**
(21) Anmeldenummer: 19176897.7
(22) Anmeldetag: 28.05.2019
(51) Int. Cl.: H01M 4/66, H01M 10/04, H01M 10/0587, H01M 10/0525, H01M 50/109, H01M 50/119, H01M 50/121, H01M 50/124, H01M 50/128, H01M 50/131, H01M 50/538

(54) **VERFAHREN ZUR HERSTELLUNG EINER BATTERIE UND GEMÄSS DEM VERFAHREN HERGESTELLTE BATTERIE**
METHOD FOR PRODUCING A BATTERY AND BATTERY PRODUCED ACCORDING TO THE METHOD
PROCÉDÉ DE FABRICATION D'UNE BATTERIE ET BATTERIE FABRIQUÉE SELON LEDIT PROCÉDÉ

(43) Veröffentlichungstag der Anmeldung: 02.12.2020
(73) Patentinhaber: VARTA Microbattery GmbH, 73479 Ellwangen Jagst (DE)
(72) Erfinder: Kilibarda, Goran, 73525 Schwäbisch Gmünd (DE); Kreidler, Bernd, 73479 Ellwangen (DE); Rieger, Joachim, 73433 Aalen (DE)
(74) Vertreter: Ostertag & Partner Patentanwälte mbB

(56) Entgegenhaltungen:
- EP-A1- 3 121 865
- EP-A1- 3 255 714
- EP-A2- 3 024 055

## Beschreibung

Die nachfolgend beschriebene Erfindung betrifft ein Verfahren zur Herstellung einer Batterie und eine gemäß dem Verfahren hergestellte Batterie.

Knopfzellen weisen meist ein zylindrisches Gehäuse auf, dessen Höhe gleich seinem Durchmesser oder kleiner als dieser ist. In dem Gehäuse können sehr unterschiedliche elektrochemische Systeme enthalten sein. Sehr verbreitet sind Zellen auf Basis von Zink/Luft, Zink/MnO₂ und Nickel/Zink. Auch sekundäre (wiederaufladbare) Systeme sind sehr verbreitet. Beispiele hierfür sind Nickel/Metallhydrid-, Nickel/Cadmium- und Lithium-Ionen-Systeme.

Das Gehäuse von Knopfzellen besteht klassisch in aller Regel aus zwei festen, metallischen Gehäuseteilen, zwischen denen eine elektrisch isolierende Dichtung angeordnet ist. Eines der Gehäuseteile steht in elektrischer Verbindung mit der positiven Elektrode und ist entsprechend positiv gepolt. Das andere steht in elektrischer Verbindung mit der negativen Elektrode und ist entsprechend negativ gepolt. Die Dichtung soll einen elektrischen Kontakt zwischen den entgegengesetzt gepolten Gehäuseteilen unterbinden. Darüber hinaus soll sie einem Entweichen und auch einem Eindringen von Flüssigkeit oder Feuchtigkeit aus dem oder in das Gehäuse entgegenwirken. Gewöhnlich sind die Gehäuseteile aus mit Nickel plattiertem Stahl oder aus Edelstahl gefertigt.

Im Fall einer Knopfzelle auf Lithium-Ionen-Basis enthält das Gehäuse in vielen Fällen einen Verbundkörper in Form eines Zellenstapels (stack), der aus mehreren Einzelzellen besteht. Oft enthalten die Zellen auch einen gewickelten Verbundkörper (kurz: Wickelverbundkörper), bei dem es sich in der Regel um eine Einzelzelle in gewickelter Form handelt. Knopfzellen mit Wickelverbundkörpern auf Lithium-Ionen-Basis sind beispielsweise in der WO 2010/146154 A2, EP3121865 A1 und in der WO 2010/089152 A1 beschrieben.

In den Verbundkörpern liegen in der Regel positive und negative Elektroden sowie Separatoren flach aufeinander. Meist sind die Elektroden und Separatoren beispielsweise durch Lamination oder durch Verklebung miteinander verbunden. In der Regel umfassen Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator/ positive Elektrode hergestellt.

Die Elektroden in den Verbundkörpern umfassen üblicherweise jeweils einen metallischen Stromkollektor sowie elektrochemisch aktive Komponenten (oft auch als Aktivmaterialien bezeichnet) und elektrochemisch inaktive Komponenten.

Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien oder aus einem Metallschaum oder aus einem metallisierten Vlies. Im Fall von Zellen auf Lithium-Ionen-Basis weisen die negativen Elektroden meist einen Stromkollektor aus Kupfer oder aus einer Kupferlegierung auf. Die positiven Elektroden von Zellen auf Lithium-Ionen-Basis weisen meist einen Stromkollektor aus Aluminium oder aus einer Aluminiumlegierung auf.

Als Aktivmaterialien kommen für sekundäre Lithium-Ionen-Systeme sämtliche Materialien in Frage, die Lithium-Ionen aufnehmen und wieder abgeben können. Stand der Technik sind diesbezüglich für die negative Elektrode sekundärer Lithium-Ionen-Systeme insbesondere Materialien auf Kohlenstoffbasis wie graphitischer Kohlenstoff oder zur Interkalation von Lithium befähigte nichtgraphitische Kohlenstoffmaterialien. Für die positive Elektrode sekundärer Lithium-Ionen-Systeme kommen beispielsweise Lithium-Metalloxid-Verbindungen und Lithium-Metallphosphat-Verbindungen wie LiCoO₂ und LiFePO4in Frage.

Als elektrochemisch inaktive Komponenten sind an erster Stelle Elektrodenbinder und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Leitmittel wie Ruß dienen dazu, die elektrische Leitfähigkeit der Elektroden zu erhöhen.

Als Separatoren kommen für die genannten Verbundkörper insbesondere Bänder aus porösen Kunststofffolien in Frage, beispielsweise aus einem Polyolefin oder aus einem Polyetherketon. Auch Vliese und Gewebe, insbesondere aus diesen Materialien, können zum Einsatz kommen.

Endständige Abschnitte der Stromkollektoren oder an die Stromkollektoren angeschweißte Stromleiter können dazu dienen, einen elektrischen Kontakt zwischen den Elektroden und den Gehäuseteilen eines Knopfzellengehäuses herzustellen. Im Fall von Knopfzellen sind die positiven Elektroden der Verbundkörper mit einem der zwei erwähnten Gehäuseteile eines Knopfzellengehäuses elektrisch zu verbinden, negative Elektroden mit dem anderen der Gehäuseteile.

Die Gehäuseteile einer Knopfzelle weisen in der Regel jeweils einen kreisrunden oder ovalen Boden auf. In den meisten Fällen ist es bevorzugt, die Stromkollektoren oder die daran angeschweißten Stromleiter mit diesen Böden zu verbinden, insbesondere an diese Böden anzuschweißen. Dies ist nicht immer unproblematisch. Schweißverbindungen zwischen unterschiedlichen Metallen sind manchmal schwierig zu bilden und elektrochemisch instabil. In der Folge kann es zu Prozessschwankungen und dadurch zu Ausschuss kommen.

Aus der EP 3 121 865 B1 ist es bekannt, in Knopfzellen den Boden eines Gehäuseteils mit einer dünnen Aluminiumscheibe abzudecken und den endständigen Abschnitt eines Stromkollektors aus Aluminium nicht unmittelbar am Gehäuseboden sondern an der Aluminiumscheibe anzuschweißen. Die ist insoweit nachteilhaft, als sich durch das Einlegen der Aluminiumscheibe im Mittel der Innenwiderstand der Knopfzellen erhöht.

Aus der EP 3121865 A1 sind weitere Knopfzellen mit Wickelverbundkörpern auf Lithium-Ionen-Basis bekannt. Bei diesen sind Ableiter nicht unmittelbar an ein Gehäuseteil geschweißt. Stattdessen ist es möglich, dass ein Ableiter an ein "metal flake" geschweißt wird, das auf dem Boden eines Gehäuseteils angeordnet ist.

Der vorliegenden Erfindung lag die Aufgabe zugrunde, eine verbesserte Lösung zur elektrischen Kontaktierung der Elektroden einer Batterie mit einem ihrer Gehäuseteile bereitzustellen.

Zur Lösung dieser Aufgabe schlägt die Erfindung ein Verfahren mit den in Anspruch 1 genannten Merkmalen sowie eine Batterie mit den in Anspruch 8 genannten Merkmalen vor. Weiterbildungen der Erfindung sind Gegenstand von Unteransprüchen.

Das erfindungsgemäße Verfahren dient zur Herstellung einer Batterie, welche die folgenden Merkmale aufweist:
a. Sie umfasst ein einen Innenraum einschließendes Gehäuse,
b. sie umfasst einen in dem Innenraum angeordneten Verbundkörper aus mindestens einer positiven Elektrode, mindestens einer negativen Elektrode und mindestens einem Separator,
c. das Gehäuse umfasst ein metallisches, becherförmiges erstes Gehäuseteil sowie ein metallisches zweites Gehäuseteil,
d. das becherförmige erste Gehäuseteil umfasst einen kreisförmigen oder ovalen Boden,
e. das becherförmige erste Gehäuseteil umfasst einen ringförmigen Mantel,
f. Der Boden und der Mantel des becherförmigen ersten Gehäuseteils weisen jeweils eine in den Innenraum weisende Innenseite und eine in die entgegengesetzte Richtung weisende Außenseite auf, und
g. Der Verbundkörper umfasst einen Stromleiter, der die mindestens eine positive Elektrode oder die mindestens eine negative Elektrode elektrisch mit dem becherförmigen ersten Gehäuseteil verbindet.

Das Verfahren umfasst die folgenden Schritte:
h. Abdecken der Innenseite des Bodens des becherförmigen ersten Gehäuseteils mit einer elektrisch leitenden Abdeckung,
i. Elektrisches Verbinden der Abdeckung mit dem Boden durch Verschweißung,
j. Elektrisches Verbinden des Stromleiters mit der Abdeckung durch Verschweißung, und
k. Zusammenfügen des ersten Gehäuseteils und des zweiten Gehäuseteils zu dem Gehäuse der Batterie unter Einschluss des Verbundkörpers in dem Innenraum.

Es hat sich herausgestellt, dass das eingangs erwähnte Problem des erhöhten Innenwiderstands bei der verschweißten Abdeckung nicht mehr auftritt. Darüber hinaus erlaubt es die Verschweißung auch, den Boden des Gehäuseteils zumindest in einem Teilbereich abzuschirmen, so dass er nicht mehr in Kontakt mit gegebenenfalls im Innenraum befindlichem Elektrolyt treten kann. Dies kann die elektrochemische Beständigkeit des Gehäuses der Batterie signifikant erhöhen.

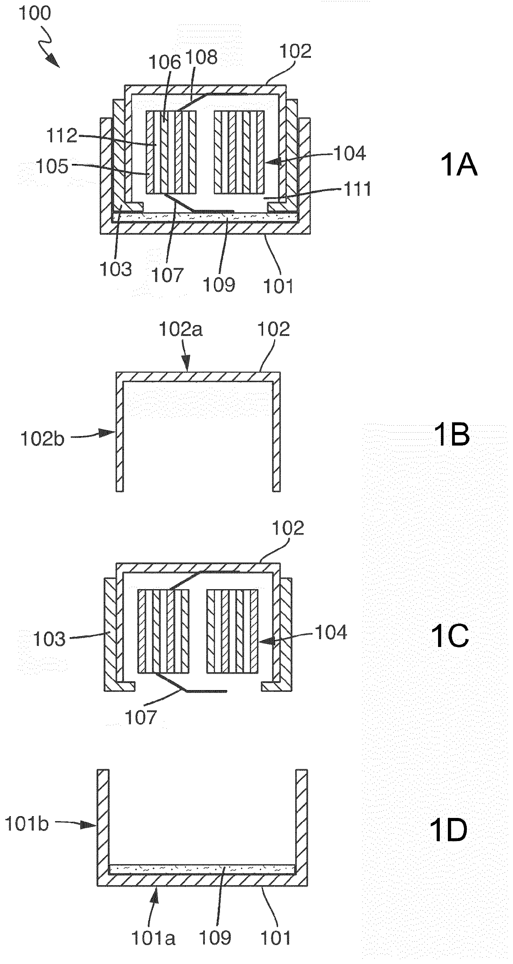

Das Gehäuse und die Gehäuseteile der Batterie, das becherförmige erste Gehäuseteil und das zweite Gehäuseteil, können beispielsweise wie die Gehäuseteile der in Figur 1 der WO 2010/146154 A2 dargestellten Zelle ausgebildet sein. Bei der erfindungsgemäßen Batterie kann es sich also insbesondere auch um eine Knopfzelle handeln. Die erfindungsgemäße Batterie kann aber beispielsweise auch eine zylindrische Rundzelle sein, also eine Höhe aufweisen, die größer als ihr Durchmesser ist.

Zwischen den zwei metallischen Gehäuseteilen ist üblicherweise eine ringförmige Dichtung aus Kunststoff angeordnet, welche die Gehäuseteile elektrisch gegeneinander isoliert. Darüber hinaus soll die Dichtung einen flüssigkeitsdichten Verschluss des Gehäuses gewährleisten.

Die Gehäuseteile bestehen bevorzugt aus einem Stahl, insbesondere einem vernickelten Stahl. Im letzteren Fall ist insbesondere die Außenseite des ersten und gegebenenfalls auch des zweiten Gehäuseteils vernickelt. Weiterhin kommt als metallischer Werkstoff auch Trimetall in Frage, beispielsweise mit der Abfolge Nickel, Stahl (oder Edelstahl) und Kupfer.

Besonders bevorzugt ist das zweite Gehäuseteil wie das erste Gehäuseteil becherförmig ausgebildet, weist also gleichfalls einen kreisförmigen oder ovalen Boden und einen ringförmigen Mantel auf. In einer Weiterbildung ist es sowohl im Fall des ersten Gehäuseteils als auch im Fall des zweiten Gehäuseteils bevorzugt, dass der Boden und der ringförmige Mantel durch einen Übergangsbereich miteinander verbunden sind.

Die Übergangsbereiche umfassen bevorzugt die Bereiche der Gehäuseteile, die außerhalb der Ebene des jeweiligen Bodens liegen, jedoch noch nicht Teil des dazugehörigen Mantelbereichs sind. Die Übergangsbereiche können abgerundet ausgebildet sein, beispielsweise schulterförmig, oder auch die Form einer scharfen Kante haben.

Die Übergangsbereiche begrenzen die Mäntel jeweils zu den Böden hin. Zur anderen Seite hin werden die Mäntel in beiden Fällen bevorzugt durch eine umlaufende freie Kante begrenzt, die eine kreisförmige oder ovale Öffnung definiert.

Die ringförmigen Mäntel der Gehäuseteile weisen in bevorzugten Ausführungsformen eine zylindrische Geometrie auf. Besonders bevorzugt können die Mäntel mit den Böden jeweils einen Winkel von 90° einschließen.

Der in dem Innenraum angeordnete Verbundkörper muss sich in seinem Grundaufbau nicht von aus dem Stand der Technik bekannten Verbundkörpern unterscheiden. Er besteht wie die eingangs erwähnten Verbundkörper aus Elektroden und mindestens einem Separator. Im Falle eines Wickelverbundkörpers kann der Verbundkörper beispielsweise eine zylindrische oder hohlzylindrische Geometrie wie etwa die in den Figuren 3a und 3b der WO 2010/146154 A2 dargestellten Wickel-Verbundkörper aufweisen. Der Wickel ist dann aus bandförmigen Elektroden und mindestens einem bandförmigen Separator gefertigt.

Bevorzugt umfasst der Verbundkörper Elektroden mit den eingangs genannten Stromkollektoren. Bei diesen handelt es sich bevorzugt um eine Folie, ein Netz, ein Gitter, einen Schaum, ein Vlies oder ein sonstiges textiles Gebilde aus einem Metall oder einer Metalllegierung.

Die Stromkollektoren weisen bevorzugt mindestens einen Abschnitt auf, der nicht mit einem Aktivmaterial bedeckt ist. Dieser Abschnitt kann in bevorzugten Ausführungsformen unmittelbar als der Stromleiter dienen, der die mindestens eine positive oder die mindestens eine negative Elektrode elektrisch mit dem becherförmigen ersten Gehäuseteil verbindet. Alternativ kann der Stromleiter auch ein separater Leiter sein, der beispielsweise an den nicht mit dem Aktivmaterial bedeckten Abschnitt des Stromkollektors geschweißt ist. Im letzteren Fall handelt es sich bei dem Stromleiter bevorzugt um eine Metallfolie.

Die Stromkollektoren weisen bevorzugt mindestens einen Abschnitt auf, der nicht mit einem Aktivmaterial bedeckt ist. Dieser Abschnitt kann in bevorzugten Ausführungsformen unmittelbar als der Stromleiter dienen, der die mindestens eine positive oder die mindestens eine negative Elektrode elektrisch mit dem becherförmigen ersten Gehäuseteil verbindet. Alternativ kann der Stromleiter auch ein separater Leiter sein, der beispielsweise an den nicht mit dem Aktivmaterial bedeckten Abschnitt des Stromkollektors geschweißt ist. Im letzteren Fall handelt es sich bei dem Stromleiter bevorzugt um eine Metallfolie.

Besonders bevorzugt umfasst der Verbundkörper einen Stromleiter, der die mindestens eine positive Elektrode elektrisch mit dem becherförmigen ersten Gehäuseteil verbindet, und einen Stromleiter, der die mindestens eine negative Elektrode elektrisch mit dem zweiten Gehäuseteil verbindet.

Alternativ kann es auch bevorzugt sein, dass der Verbundkörper einen Stromleiter umfasst, der die mindestens eine negative Elektrode elektrisch mit dem becherförmigen ersten Gehäuseteil verbindet, und einen Stromleiter, der die mindestens eine positive Elektrode elektrisch mit dem zweiten Gehäuseteil verbindet.

Wenn beide Gehäuseteile becherförmig ausgebildet sind, erfolgt das Zusammenfügen des ersten und des zweiten Gehäuseteils bevorzugt, indem das zweite Gehäuseteil mit der freien Kante seines Mantels voran in das erste Gehäuseteil eingeschoben wird, so dass der ringförmige Mantel des ersten Gehäuseteils und der ringförmige Mantel des zweiten Gehäuseteils mindestens bereichsweise überlappen und einen umlaufenden, doppelwandigen Mantel bilden und die Böden des ersten und des zweiten Gehäuseteils parallel zueinander ausgerichtet sind. Alternativ kann auch das erste Gehäuseteil mit der freien Kante seines Mantels voran in das zweite Gehäuseteil eingeschoben werden, so dass der ringförmige Mantel des zweiten Gehäuseteils und der ringförmige Mantel des ersten Gehäuseteils mindestens bereichsweise überlappen und einen umlaufenden, doppelwandigen Mantel bilden und die Böden des zweiten und des ersten Gehäuseteils parallel zueinander ausgerichtet sind.

Die Dimensionen des ersten und des zweiten Gehäuseteils müssen entsprechend aneinander angepasst werden. Das Gehäuseteil, das in das andere eingeschoben werden soll, weist gewöhnlich einen Mantel mit einem kleineren Durchmesser als das andere Gehäuseteil auf. Auf den Mantel mit dem kleineren Durchmesser wird meist auch die erwähnte ringförmige Dichtung aus Kunststoff aufgeschoben, bevor die Gehäuseteile zusammengefügt werden. Bevorzugt wird der Verbundkörper in dem Gehäuseteil mit dem kleineren Mantel positioniert, bevor die Gehäuseteile zusammengefügt werden.

Zum Verschluss des Gehäuses kann in einigen Ausführungsformen die freie umlaufende Kante des größeren Gehäuseteils zur Erzeugung eines Formschlusses nach innen umgebogen werden (Bördelung). Grundsätzlich ist aber auch ein bördelfreier Verschluss möglich, wie das etwa in Figur 1 der WO 2010/146154 A2 dargestellt ist.

Die Verschweißung der Abdeckung mit dem Boden des becherförmigen ersten Gehäuseteils kann insbesondere mittels Widerstandsschweißen, mittels Ultraschallschweißen oder mittels Laserschweißen erfolgen.

In Analogie hierzu kann die Verschweißung der Abdeckung mit dem Stromleiter des Verbundkörpers insbesondere mittels Widerstandsschweißen, mittels Ultraschallschweißen oder mittels Laserschwei-ßen erfolgen.

Die Schweißverbindung zwischen der Abdeckung und dem Stromleiter sowie dem Boden kann über Schweißpunkte und/oder Schweißlinien gewährleistet werden.

In einer bevorzugten Weiterbildung der Erfindung zeichnet sich das Verfahren durch mindestens eines der unmittelbar folgenden Merkmale a. bis c. aus:
a. Die verwendete Abdeckung umfasst als elektrisch leitfähige Komponente Aluminium, Chrom, Zinn oder einer Legierung dieser Elemente.
b. Die verwendete Abdeckung besteht aus dem Aluminium, dem Chrom, dem Zinn oder der Legierung dieser Elemente.
c. Die verwendete Abdeckung umfasst einen Kern aus einem Kunststoff und eine metallische Beschichtung, insbesondere eine Beschichtung aus dem Aluminium, dem Chrom, dem Zinn oder der Legierung dieser Elemente.

Besonders bevorzugt sind die unmittelbar vorstehenden Merkmale a. und c. in Kombination miteinander realisiert. Es ist also in bevorzugten Ausführungen sowohl möglich, dass die verwendete Abdeckung ausschließlich metallischer Natur ist, als auch, dass die verwendete Abdeckung einen Kunststoffkern aufweist, der mit einer metallischen Beschichtung überzogen ist, vorzugsweise komplett mit der Beschichtung überzogen ist.

In einer bevorzugten Weiterbildung der Erfindung zeichnet sich das Verfahren durch mindestens eines der unmittelbar folgenden Merkmale a. bis c. aus:
a. Die verwendete Abdeckung bedeckt den Boden bereichsweise oder vollständig.
b. Die verwendete Abdeckung ist als Scheibe ausgebildet.
c. Die verwendete Abdeckung ist derart ausgebildet, dass sie den Boden von im Innenraum befindlichen Elektrolyt abschirmt.

Besonders bevorzugt ist die verwendete Abdeckung als Scheibe ausgebildet und bedeckt den Boden vollständig, so dass sie die Abschirmung des Bodens von dem im Innenraum befindlichen Elektrolyt bewirken kann. Wird die Schweißverbindung zwischen der Abdeckung und dem Boden über eine umlaufende Schweißnaht entlang des Randes der Scheibe gewährleistet, so ermöglicht dies die oben erwähnte hermetische Abschirmung des Bodens.

Die Scheibe weist in bevorzugten Ausführungsformen einen Durchmesser im Bereich von 3 mm bis 20 mm auf.

In weiteren bevorzugten Ausführungsformen weist die Scheibe eine Dicke im Bereich von 10 µm bis 1 mm, bevorzugt im Bereich von 100 µm bis 300 µm auf.

Wenn die Scheibe den Kern aus Kunststoff und die metallische Beschichtung aufweist, so weist die metallische Beschichtung bevorzugt eine Dicke im Bereich von 100 nm bis 100 µm auf.

In einer ersten besonders bevorzugten Weiterbildung der Erfindung zeichnet sich das Verfahren durch mindestens eines der unmittelbar folgenden Merkmale a. und b., in einigen besonders bevorzugten Ausführungsformen auch durch eine Kombination der beiden Merkmale, aus:
a. Das elektrische Verbinden des Stromleiters mit der Abdeckung durch Verschweißung erfolgt vor dem Abdecken des Bodens mit der elektrisch leitenden Abdeckung.
b. Das elektrische Verbinden der Abdeckung mit dem Boden durch Verschweißung erfolgt nach dem Zusammenfügen des ersten Gehäuseteils und des zweiten Gehäuseteils zu dem Gehäuse der Batterie.

Bei dieser Variante kann als Verbundkörper beispielsweise ein zylindrischer Wickelverbundkörper umfassend einen mit einer positiven Elektrode elektrisch verbundenen Stromleiter und einen mit einer negativen Elektrode elektrisch verbundenen Stromleiter, beide Stromleiter in Form einer Metallfolie, eingesetzt werden.

Zur Herstellung der elektrischen Verbindung des Stromleiters mit der Abdeckung kann einer der Stromleiter mit einer als Abdeckung dienenden Metallscheibe verschweißt werden, die auf einer der zwei Stirnseiten des Wickelverbundkörpers abgelegt wird, beispielsweise durch Ultraschallverschwei-ßung. Der Wickelverbundkörper kann dann mit dieser Stirnseite voran in das becherförmige erste Gehäuseteil eingeschoben werden, bis die Metallscheibe flach auf dem Boden des ersten Gehäuseteils aufliegt.

Nach dem Zusammenfügen des Gehäuses kann dann beispielsweise eine Verschweißung der Abdeckung mit dem Boden von außen erfolgen, wie das in der WO 2010/146154 A2 beschrieben ist. Als Schweißverfahren können insbesondere Laserschweißen oder Widerstandsschweißen eingesetzt werden.

In einer zweiten besonders bevorzugten Weiterbildung der Erfindung zeichnet sich das Verfahren durch mindestens eines der unmittelbar folgenden Merkmale a. und b., in einigen besonders bevorzugten Ausführungsformen auch durch eine Kombination der beiden Merkmale, aus:
a. Das elektrische Verbinden des Stromleiters mit der Abdeckung durch Verschweißung erfolgt nach dem Abdecken des Bodens mit der elektrisch leitenden Abdeckung.
b. Das elektrische Verbinden der Abdeckung mit dem Boden durch Verschweißung erfolgt nach dem Zusammenfügen des ersten Gehäuseteils und des zweiten Gehäuseteils zu dem Gehäuse der Batterie.

Bei dieser Variante kann als Verbundkörper beispielsweise ein Wickelverbundkörper mit hohlzylindrischer Geometrie, also mit einem zentralen, axialen, zylindrischen Hohlraum, zum Einsatz kommen, der gleichfalls einen mit einer positiven Elektrode und einen mit einer negativen Elektrode elektrisch verbundenen Stromleiter umfasst, jeweils in Form einer Metallfolie.

Zur Herstellung der elektrischen Verbindung des Stromleiters mit der Abdeckung kann eine der Metallfolien, beispielsweise die mit der positiven Elektrode verbundene, flach auf einer der zwei Stirnseiten abgelegt werden. Nach einem Einlegen der Metallscheibe flach auf den Boden des ersten Gehäuseteils kann der Wickelverbundkörper mit dieser Stirnseiten voran in das becherförmige erste Gehäuseteil eingeschoben werden, bis die darauf abgelegte Metallfolie flach auf der Metallscheibe aufliegt. Dann können eine oder mehrere Schweißelektroden durch den axial ausgerichteten Hohlraum geschoben werden, bis sie die Metallfolie gegen die Metallscheibe pressen. Zur Herstellung einer Schweißverbindung zwischen der Metallfolie und der Metallscheibe kann durch die Schweißelektroden ein Schweißstrom in die Metallfolie eingeleitet werden. Alternativ kann die Metallfolie beispielsweise mittels eines Laserstrahls durch den axial ausgerichteten Hohlraum oder mittels eines in dem axial ausgerichteten Hohlraum erzeugten Laserstrahls an die Metallscheibe geschweißt werden.

Nach dem Zusammenfügen des Gehäuses kann dann beispielsweise eine Verschweißung der Abdeckung mit dem Boden von außen erfolgen, wie das in der WO 2010/146154 A2 beschrieben ist. Als Schweißverfahren können auch hier insbesondere Laserschweißen oder Widerstandsschweißen eingesetzt werden.

In einer dritten besonders bevorzugten Weiterbildung der Erfindung zeichnet sich das Verfahren durch mindestens eines der unmittelbar folgenden Merkmale a. und b., in einigen besonders bevorzugten Ausführungsformen auch durch eine Kombination der beiden Merkmale, aus:
a. Das elektrische Verbinden des Stromleiters mit der Abdeckung durch Verschweißung erfolgt nach dem Abdecken des Bodens mit der elektrisch leitenden Abdeckung.
b. Das elektrische Verbinden der Abdeckung mit dem Boden durch Verschweißung erfolgt vor dem Zusammenfügen des ersten Gehäuseteils und des zweiten Gehäuseteils zu dem Gehäuse der Batterie.

Bei dieser Variante kann als Verbundkörper gleichfalls ein Wickelverbundkörper mit hohlzylindrischer Geometrie, also mit einem zentralen, axialen, zylindrischen Hohlraum, zum Einsatz kommen, der einen mit einer positiven Elektrode und einen mit einer negativen Elektrode elektrisch verbundenen Stromleiter umfasst, jeweils in Form einer Metallfolie.

Zur Herstellung der elektrischen Verbindung des Stromleiters mit der Abdeckung kann eine der Metallfolien, beispielsweise die mit der positiven Elektrode verbundene, flach auf einer der zwei Stirnseiten abgelegt werden. Nach einem Einlegen der Metallscheibe flach auf den Boden des ersten Gehäuseteils kann der Wickelverbundkörper mit dieser Stirnseiten voran in das becherförmige erste Gehäuseteil eingeschoben werden, bis die darauf abgelegte Metallfolie flach auf der Metallscheibe aufliegt. Dann können eine oder mehrere Schweißelektroden durch den axial ausgerichteten Hohlraum geschoben werden, bis sie die Metallfolie gegen die Metallscheibe pressen. Zur Herstellung einer Schweißverbindung zwischen der Metallfolie und der Metallscheibe wird durch die Schweißelektroden ein Schweißstrom in die Metallfolie eingeleitet. Alternativ kann die Metallfolie mittels eines Laserstrahls durch den axial ausgerichteten Hohlraum oder mittels eines in dem axial ausgerichteten Hohlraum erzeugten Laserstrahls an die Metallscheibe geschweißt werden.

Noch vor dem Zusammenfügen des Gehäuses kann dann beispielsweise eine Verschweißung der Abdeckung mit dem Boden von außen erfolgen, wie das in der WO 2010/146154 A2 beschrieben ist. Als Schweißverfahren können auch hier insbesondere Laserschweißen oder Widerstandsschweißen eingesetzt werden. Anschließend können das erste und das zweite Gehäuseteil zu dem Gehäuse zusammengefügt werden.

In einer vierten besonders bevorzugten Weiterbildung der Erfindung zeichnet sich das Verfahren durch mindestens eines der unmittelbar folgenden Merkmale a. und b., in einigen besonders bevorzugten Ausführungsformen auch durch eine Kombination der beiden Merkmale, aus:
a. Das elektrische Verbinden des Stromleiters mit der Abdeckung durch Verschweißung erfolgt nach dem Abdecken des Bodens mit der elektrisch leitenden Abdeckung.
b. Das elektrische Verbinden des Stromleiters mit der Abdeckung durch Verschweißung und das elektrische Verbinden der Abdeckung mit dem Boden durch Verschweißung erfolgen gleichzeitig.

Bei dieser Variante kann als Verbundkörper gleichfalls ein Wickelverbundkörper mit hohlzylindrischer Geometrie, also mit einem zentralen, axialen, zylindrischen Hohlraum, zum Einsatz kommen, der einen mit einer positiven Elektrode und einen mit einer negativen Elektrode elektrisch verbundenen Stromleiter umfasst, jeweils in Form einer Metallfolie.

Zur Herstellung der elektrischen Verbindung des Stromleiters mit der Abdeckung kann eine der Metallfolien, beispielsweise die mit der positiven Elektrode verbundene, flach auf einer der zwei Stirnseiten abgelegt werden. Nach einem Einlegen der Metallscheibe flach auf den Boden des ersten Gehäuseteils kann der Wickelverbundkörper mit dieser Stirnseiten voran in das becherförmige erste Gehäuseteil eingeschoben werden, bis die darauf abgelegte Metallfolie flach auf der Metallscheibe aufliegt. Dann können eine oder mehrere Schweißelektroden durch den axial ausgerichteten Hohlraum geschoben werden, bis sie die Metallfolie gegen die Metallscheibe pressen. Zur Herstellung einer Schweißverbindung zwischen der Metallfolie und der Metallscheibe und zwischen der Metallscheibe und dem Boden des ersten Gehäuseteils wird durch die Schweißelektroden ein Schweißstrom in die Metallfolie eingeleitet. Alternativ kann die Verschweißung mittels eines Laserstrahls durch den axial ausgerichteten Hohlraum oder mittels eines in dem axial ausgerichteten Hohlraum erzeugten Laserstrahls erfolgen.

Bei einem Schweißen mittels Schweißelektroden können zwei oder mehr durch den axial ausgerichteten Hohlraum geschobene Schweißelektroden verwendet werden. Alternativ kann auch eine Schwei-ßelektrode durch den Hohlraum geschoben werden, während mindestens eine weitere Schweißelektrode an der Außenseite des Bodens des ersten Gehäuseteils positioniert wird. Der Schweißstrom fließt in diesem Fall durch das erste Gehäuseteil hindurch.

Die Batterie gemäß der vorliegenden Erfindung resultiert unmittelbar aus dem oben beschriebenen Verfahren. Sie zeichnet sich entsprechend stets durch die folgenden Merkmale aus:
a. Sie umfasst ein einen Innenraum einschließendes Gehäuse,
b. sie umfasst einen in dem Innenraum angeordneten Verbundkörper aus mindestens einer positiven Elektrode, mindestens einer negativen Elektrode und mindestens einem Separator,
c. das Gehäuse umfasst ein metallisches, becherförmiges erstes Gehäuseteil sowie ein metallisches zweites Gehäuseteil,
d. das becherförmige erste Gehäuseteil umfasst einen kreisförmigen oder ovalen Boden,
e. das becherförmige erste Gehäuseteil umfasst einen ringförmigen Mantel,
f. der Boden und der Mantel des becherförmigen ersten Gehäuseteils weisen jeweils eine in den Innenraum weisende Innenseite und eine in die entgegengesetzte Richtung weisende Außenseite auf, und
g. der Verbundkörper umfasst einen Stromleiter, der die mindestens eine positive Elektrode oder die mindestens eine negative Elektrode elektrisch mit dem becherförmigen ersten Gehäuseteil verbindet.

Besonders zeichnet sich die Batterie dadurch aus, dass
h. die Innenseite des Bodens des becherförmigen ersten Gehäuseteils mit einer elektrisch leitenden Abdeckung abgedeckt ist,
i. die Abdeckung mit dem Boden durch Verschweißung elektrisch verbunden ist, und
j. der Stromleiter mit der Abdeckung durch Verschweißung elektrisch verbunden ist.

Betreffend bevorzugte Ausgestaltungen der Komponenten der Batterie wird auf die Erläuterungen im Zusammenhang mit dem beschriebenen Verfahren verwiesen. Ungeachtet dessen werden einige besonders bevorzugte Merkmale der Batterie im Folgenden noch einmal herausgestellt, nämlich dass
- der Verbundkörper die Elektroden bevorzugt in gestapelter Form oder in gewickelter Form umfasst,
   und/oder
- dass die Elektroden dazu ausgebildet sind, Lithium-Ionen reversibel ein- und auslagern zu können,
   und/oder
- dass die Elektroden bevorzugt jeweils einen Stromkollektor, der teilweise mit einem Aktivmaterial bedeckt ist, umfassen und/oder dass der Stromleiter bevorzugt ein nicht mit dem Aktivmaterial bedeckter Teil des Stromkollektors ist,
   und/oder
- dass zumindest das becherförmige erste Gehäuseteil bevorzugt aus Stahl oder Edelstahl besteht und/oder dass die Außenseite des ersten becherförmigen Gehäuseteils bevorzugt mit einer Schicht aus Nickel bedeckt ist,
   und/oder
- dass das zweite Gehäuseteil bevorzugt wie das erste Gehäuseteil becherförmig ausgebildet ist und/oder die Batterie bevorzugt eine Knopfzelle ist.

Früher wurden ausschließlich mehrere in Serie geschaltete elektrochemische Zellen in einem Gehäuse als Batterie bezeichnet. Heute werden jedoch häufig auch bereits einzelne elektrochemische Zellen als Batterie bezeichnet. Dies soll auch vorliegend so gehandhabt werden. Selbst eine Knopfzelle mit nur einer positiven und einer negativen Elektrode wird im Rahmen der vorliegenden Anmeldung als Batterie bezeichnet.

Insbesondere wenn die Batterie eine wieder aufladbare Lithium-Ionen-Batterie ist, zeichnet sich die Batterie bevorzugt durch mindestens eines der unmittelbar folgenden Merkmale a. bis c. aus:
a. Das erste Gehäuseteil ist elektrisch mit der mindestens einen positiven Elektrode verbunden.
b. Der Stromleiter besteht aus Aluminium oder aus einerAluminiumlegierung.
c. Die verwendete Abdeckung besteht aus Aluminium oder aus einer Aluminiumlegierung.

Besonders bevorzugt sind die unmittelbar vorstehenden Merkmale a. bis c. in Kombination miteinander realisiert.

Idealerweise basiert der Stromleiter auf dem gleichen Metall wie der Stromkollektor, mit dem er verbunden ist. Im Falle von Lithium-Ionen-Batterien bestehen Stromkollektoren der positiven Elektrode häufig aus Aluminium oder einer Aluminiumlegierung, Stromkollektoren für die negative Elektrode hingegen bevorzugt aus Kupfer oder einer Kupferlegierung.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigt schematisch:
Figur 1 eine Ausführungsform der erfindungsgemäßen Batterie im Querschnitt sowie die bei der Montage der Batterie verwendeten Komponenten.

Die in Fig. 1A dargestellte Knopfzelle 100 mit den Merkmalen weist ein Gehäuse auf, das aus dem ersten Gehäuseteil 101 und dem zweiten Gehäuseteil 102 zusammengesetzt ist. Die beiden Gehäuseteile 101 und 102 bestehen aus Stahl. Sie sind beide becherförmig. Das Gehäuseteil 101 umfasst den kreisförmigen Boden 101a und den ringförmigen Mantel 101b. Das Gehäuseteil 102 umfasst den kreisförmigen Boden 102a und den ringförmigen Mantel 102b.

Zwischen den Gehäuseteilen 101 und 102 ist die Dichtung 103 angeordnet, die das Gehäuse abdichtet. Das Gehäuse schließt einen Innenraum 111 ein, in dem der Verbundkörper 104 angeordnet ist. Dieser ist aus der negativen Elektrode 105, der positiven Elektrode 106 und dem Separator 112 gefertigt und liegt als Wickel vor. Die Stirnseiten des Wickels weisen in Richtung der Böden 101a und 102a.

Die Elektroden 105 und 106 umfassen jeweils einen Stromkollektor, der überwiegend mit einem Aktivmaterial bedeckt und daher auch in weiten Teilen nicht sichtbar ist, abgesehen von den nicht mit Aktivmaterial bedeckten Teilbereichen 107 und 108. Diese Teilbereiche 107 und 108 fungieren vorliegend als Stromleiter. Der Stromleiter 107 verbindet die positive Elektrode 106 mit dem becherförmigen ersten Gehäuseteil 101. Über den Stromleiter 108 ist die negative Elektrode 105 mit dem zweiten Gehäuseteil 102 verbunden. Der Stromkollektor für die negative Elektrode 105 und damit der Stromleiter 108 ist eine Kupferfolie. Der Stromkollektor für die positive Elektrode 106 und damit der Stromleiter 107 ist eine Aluminiumfolie.

Die in den Innenraum 111 weisende Seite des Bodens 101a des Gehäuseteils 101 ist mit der aus Aluminium bestehenden Metallscheibe 109 abgedeckt, die als elektrisch leitende Abdeckung fungiert. Die Metallscheibe 109 ist an ihrem Rand über eine Schweißverbindung (nicht dargestellt), beispielsweise eine kreisförmige Schweißnaht, an den Boden 101a angeschweißt. Die Metallscheibe 109 ist derart ausgebildet, dass sie den Boden 101a von im Innenraum 111 befindlichem Elektrolyt abschirmt.

Der Stromleiter 107 ist mit der Metallscheibe 109 gleichfalls durch Verschweißung verbunden. Der Stromleiter 108 ist mit der Innenseite des Bodens 102a des Gehäuseteils 102 verbunden, ebenfalls durch Verschweißung.

Zur Montage der Knopfzelle 100 wird diese aus dem mit der eingelegten Aluminiumscheibe 109 versehenen Gehäuseteil 101 (dargestellt in Fig. 1D), dem Gehäuseteil 102 (dargestellt in Fig. 1B) und dem Verbundkörper 104 (dargestellt in Fig. 1C) zusammengefügt. Der Verbundkörper 104 wird hierzu in das Gehäuseteil 102 eingeschoben, weiterhin wird auf den Mantel 102b die Dichtung 103 aufgezogen. Anschließend wird das vormontierte Ensemble aus dem Gehäuseteil 102, dem Verbundkörper 104 und der Dichtung 103 in das Gehäuseteil 101 eingeschoben, das Gehäuse wird geschlossen. Bevorzugt ist die Aluminiumscheibe 109 mit der Innenseite des Bodens 101a des Gehäuseteils 101 bei der Montage bereits verschweißt. Grundsätzlich kann dies aber auch erst später erfolgen, siehe unten.

Das Anschweißen des Stromleiters 108 an die Innenseite des Bodens 102a erfolgt bevorzugt vor dem Einschieben des vormontierten Ensembles in das Gehäuseteil 101. Beispielsweise kann hierzu eine Schweißelektrode durch das Zentrum des Verbundkörpers 104 geführt und der Stromleiter 108 durch eine Widerstandsschweißung an der Innenseite des Bodens 102a fixiert werden. Bei ausreichender Länge kann der Stromleiter 108 auch vor dem Einschieben des Verbundkörpers 104 in das Gehäuseteil 102 an den Boden 102a geschweißt werden. Ansonsten ist grundsätzlich auch ein Anschweißen nach dem Einschieben des Verbundkörpers 104 oder sogar nach dem Schließen des Gehäuses möglich, analog zu der in der WO 2010/146154 A2 beschriebenen Vorgehensweise.

Das Anschweißen des Stromleiters 107 an die Metallscheibe 109 kann grundsätzlich ebenfalls nach dem Schließen des Gehäuses erfolgen, z.B. gleichfalls analog zu der in der WO 2010/146154 A2 beschriebenen Vorgehensweise. Beispielsweise kann mittels eines Lasers gleichzeitig eine Verschweißung des Stromleiters 107 mit der Metallscheibe 109 und der Metallscheibe 109 mit der Innenseite des Bodens 101a erfolgen. Bei ausreichender Länge kann der Stromleiter 108 aber auch vor dem Schlie-ßen des Gehäuses an die Metallscheibe 109 geschweißt werden.

## Patentansprüche

1. Verfahren zur Herstellung einer Batterie (100) mit den Merkmalen
a. Sie umfasst ein einen Innenraum (111) einschließendes Gehäuse (101, 102), und
b. Sie umfasst einen in dem Innenraum (111) angeordneten Verbundkörper (104) aus mindestens einer positiven Elektrode (106), mindestens einer negativen Elektrode (105) und mindestens einem Separator (112),
sowie den zusätzlichen Merkmalen
c. Das Gehäuse umfasst ein metallisches, becherförmiges erstes Gehäuseteil (101) sowie ein metallisches zweites Gehäuseteil (102),
d. Das becherförmige erste Gehäuseteil (101) umfasst einen kreisförmigen oder ovalen Boden (101a),
e. Das becherförmige erste Gehäuseteil (101) umfasst einen ringförmigen Mantel (101b),
f. Der Boden (101a) und der Mantel (101b) des becherförmigen ersten Gehäuseteils (101) weisen jeweils eine in den Innenraum weisende Innenseite und eine in die entgegengesetzte Richtung weisende Außenseite auf, und
g. Der Verbundkörper (104) umfasst einen Stromleiter (107), der die mindestens eine positive Elektrode (106) oder die mindestens eine negative Elektrode (105) elektrisch mit dem becherförmigen ersten Gehäuseteil (101) verbindet,
wobei das Verfahren die Schritte
h. Abdecken der Innenseite des Bodens (101a) des becherförmigen ersten Gehäuseteils (101) mit einer elektrisch leitenden Abdeckung (109),
i. Elektrisches Verbinden der Abdeckung (109) mit dem Boden (101a) durch Verschweißung,
j. Elektrisches Verbinden des Stromleiters (107) mit der Abdeckung (109) durch Verschweißung, und
k. Zusammenfügen des ersten Gehäuseteils (101) und des zweiten Gehäuseteils (102) zu dem Gehäuse der Batterie (100) unter Einschluss des Verbundkörpers (104) in dem Innenraum (111),
umfasst.

2. Verfahren nach Anspruch 1, **gekennzeichnet durch** mindestens einen der folgenden zusätzlichen Schritte:
a. Die verwendete Abdeckung (109) umfasst als elektrisch leitfähige Komponente Aluminium, Chrom, Zinn oder einer Legierung dieser Elemente.
b. Die verwendete Abdeckung (109) besteht aus dem Aluminium, dem Chrom, dem Zinn oder der Legierung dieser Elemente.
c. Die verwendete Abdeckung (109) umfasst einen Kern aus einem Kunststoff und eine Beschichtung aus dem Aluminium, dem Chrom, dem Zinn oder der Legierung dieser Elemente.

3. Verfahren nach Anspruch 1 oder nach Anspruch 2, **gekennzeichnet durch** mindestens einen der folgenden zusätzlichen Schritte:
a. Die verwendete Abdeckung (109) bedeckt den Boden (101a) bereichsweise oder vollständig.
b. Die verwendete Abdeckung (109) ist als Scheibe ausgebildet.
c. Die verwendete Abdeckung (109) ist derart ausgebildet, dass sie den Boden (101a) von im Innenraum (111) befindlichen Elektrolyt abschirmt.

4. Verfahren nach einem der vorhergehenden Ansprüche, **gekennzeichnet durch** mindestens einen der folgenden zusätzlichen Schritte:
a. Das elektrische Verbinden des Stromleiters (107) mit der Abdeckung (109) durch Verschwei-ßung erfolgt vor dem Abdecken des Bodens (101a) mit der elektrisch leitenden Abdeckung (109).
b. Das elektrische Verbinden der Abdeckung (109) mit dem Boden (101a) durch Verschweißung erfolgt nach dem Zusammenfügen des ersten Gehäuseteils (101) und des zweiten Gehäuseteils (102) zu dem Gehäuse der Batterie (100).

5. Batterie (100) mit den Merkmalen
a. Sie umfasst ein einen Innenraum (111) einschließendes Gehäuse (101, 102), und
b. Sie umfasst einen in dem Innenraum (111) angeordneten Verbundkörper (104) aus mindestens einer positiven Elektrode (106), mindestens einer negativen Elektrode (105) und mindestens einem Separator (112),
sowie den zusätzlichen Merkmalen
c. Das Gehäuse umfasst ein metallisches, becherförmiges erstes Gehäuseteil (101) sowie ein metallisches zweites Gehäuseteil (102),
d. Das becherförmige erste Gehäuseteil (101) umfasst einen kreisförmigen oder ovalen Boden (101a),
e. Das becherförmige erste Gehäuseteil (101) umfasst einen ringförmigen Mantel (101b),
f. Der Boden (101a) und der Mantel (101b) des becherförmigen ersten Gehäuseteils (101) weisen jeweils eine in den Innenraum weisende Innenseite und eine in die entgegengesetzte Richtung weisende Außenseite auf, und
g. Der Verbundkörper (104) umfasst einen Stromleiter (107), der die mindestens eine positive Elektrode (106) oder die mindestens eine negative Elektrode (105) elektrisch mit dem becherförmigen ersten Gehäuseteil verbindet,
wobei
h. die Innenseite des Bodens (101a) des becherförmigen ersten Gehäuseteils (101) mit einer elektrisch leitenden Abdeckung (109) abgedeckt ist,
i. die Abdeckung (109) mit dem Boden (101a) durch Verschweißung elektrisch verbunden ist, und
j. der Stromleiter (107) mit der Abdeckung (109) durch Verschweißung elektrisch verbunden ist.

6. Batterie (100) nach Anspruch 5, **gekennzeichnet durch** eines der folgenden zusätzlichen Merkmale:
a. Der Verbundkörper (104) umfasst die Elektroden (105, 106) in gestapelter Form oder in gewickelter Form.
b. Die Elektroden (105, 106) sind dazu ausgebildet, Lithium-Ionen reversibel ein- und auslagern zu können.

7. Batterie nach Anspruch 5 oder Anspruch 6, **gekennzeichnet durch** die folgenden zusätzlichen Merkmale:
a. Das erste Gehäuseteil (101) ist elektrisch mit der mindestens einen positiven Elektrode (106) verbunden.
b. Der Stromleiter (107) besteht aus Aluminium oder aus einer Aluminiumlegierung.
c. Die verwendete Abdeckung (109) besteht aus Aluminium oder aus einer Aluminiumlegierung.

8. Batterie (100) nach einem der Ansprüche 5 bis 7, **gekennzeichnet durch** die folgenden zusätzlichen Merkmale:
a. Die Elektroden (105, 106) umfassen jeweils einen Stromkollektor (107, 108) der teilweise mit einem Aktivmaterial bedeckt ist.
b. Der Stromleiter (107) ist ein nicht mit dem Aktivmaterial bedeckter Teil des Stromkollektors.

9. Batterie (100) nach einem der Ansprüche 5 bis 8, **gekennzeichnet durch** mindestens eines der folgenden zusätzlichen Merkmale:
a. Das becherförmige erste Gehäuseteil (101) besteht aus Stahl oder Edelstahl.
b. Die Außenseite des becherförmigen ersten Gehäuseteils (101) ist mit einer Schicht aus Nickel bedeckt.

10. Batterie (100) nach einem der Ansprüche 5 bis 9, **gekennzeichnet durch** mindestens eines der folgenden zusätzlichen Merkmale:
a. Das zweite Gehäuseteil (102) ist gleichfalls becherförmig ausgebildet.
b. Die Batterie (100) ist eine Knopfzelle.

## Claims

1. Process for producing a battery (100) having the features
a. it comprises a housing (101, 102) enclosing an interior space (111), and
b. it comprises a composite body (104) which is arranged in the interior space (111) and is made up of at least one positive electrode (106), at least one negative electrode (105) and at least one separator (112),
and also the additional features
c. the housing comprises a metallic, cup-shaped first housing part (101) and a metallic second housing part (102),
d. the cup-shaped first housing part (101) comprises a circular or oval bottom (101a),
e. the cup-shaped first housing part (101) comprises a ring-shaped side wall (101b),
f. the bottom (101a) and the side wall (101b) of the cup-shaped first housing part (101) each have an inside facing the interior space and an outside facing in the opposite direction, and
g. the composite body (104) comprises an electric conductor (107) which electrically connects the at least one positive electrode (106) or the at least one negative electrode (105) to the cup-shaped first housing part (101),
wherein the process comprises the steps
h. covering the inside of the bottom (101a) of the cup-shaped first housing part (101) with an electrically conductive covering (109),
i. electrically connecting the covering (109) to the bottom (101a) by welding,
j. electrically connecting the electric conductor (107) to the covering (109) by welding, and
k. assembling the first housing part (101) and the second housing part (102) to form the housing of the battery (100) with inclusion of the composite body (104) in the interior space (111).

2. Process according to Claim 1, **characterized by** at least one of the following additional steps:
a. The covering (109) used comprises aluminium, chromium, tin or an alloy of these elements as electrically conductive component.
b. The covering (109) used consists of the aluminium, the chromium, the tin or the alloy of these elements.
c. The covering (109) used comprises a core composed of a polymer and a coating composed of the aluminium, the chromium, the tin or the alloy of these elements.

3. Process according to Claim 1 or according to Claim 2, **characterized by** at least one of the following additional steps:
a. The covering (109) used covers the bottom (101a) in regions or in its entirety.
b. The covering (109) used is configured as disc.
c. The covering (109) used is configured in such a way that it shields the bottom (101a) from electrolyte present in the interior space (111).

4. Process according to any of the preceding claims, **characterized by** at least one of the following additional steps:
a. The electrical connection of the electric conductor (107) with the covering (109) by welding is carried out before covering of the bottom (101a) with the electrically conductive covering (109).
b. The electrical connection of the covering (109) with the bottom (101a) by welding is carried out after assembly of the first housing part (101) and the second housing part (102) to form the housing of the battery (100).

5. Battery (100) having the features
a. it comprises a housing (101, 102) enclosing an interior space (111), and
b. it comprises a composite body (104) which is arranged in the interior space (111) and is made up of at least one positive electrode (106), at least one negative electrode (105) and at least one separator (112),
and also the additional features
c. the housing comprises a metallic, cup-shaped first housing part (101) and a metallic second housing part (102),
d. the cup-shaped first housing part (101) comprises a circular or oval bottom (101a),
e. the cup-shaped first housing part (101) comprises a ring-shaped side wall (101b),
f. the bottom (101a) and the side wall (101b) of the cup-shaped first housing part (101) each have an inside facing the interior space and an outside facing in the opposite direction, and
g. the composite body (104) comprises an electric conductor (107) which electrically connects the at least one positive electrode (106) or the at least one negative electrode (105) to the cup-shaped first housing part,
wherein
h. the inside of the bottom (101a) of the cup-shaped first housing part (101) is covered with an electrically conductive covering (109),
i. the covering (109) is electrically connected to the bottom (101a) by welding, and
j. the electric conductor (107) is electrically connected to the covering (109) by welding.

6. Battery (100) according to Claim 5, **characterized by** one of the following additional features:
a. The composite body (104) comprises the electrodes (105, 106) in stacked form or in rolled form.
b. The electrodes (105, 106) are configured so as to be able to incorporate and release lithium ions reversibly.

7. Battery according to Claim 5 or Claim 6, **characterized by** the following additional features:
a. The first housing part (101) is electrically connected to the at least one positive electrode (106).
b. The electric conductor (107) consists of aluminium or of an aluminium alloy.
c. The covering (109) used consists of aluminium or of an aluminium alloy.

8. Battery (100) according to any of Claims 5 to 7, **characterized by** the following additional features:
a. The electrodes (105, 106) each comprise a current collector (107, 108) which is partly covered with an active material.
b. The electric conductor (107) is a part of the current collector which is not covered with the active material.

9. Battery (100) according to any of Claims 5 to 8, **characterized by** at least one of the following additional features:
a. The cup-shaped first housing part (101) consists of steel or stainless steel.
b. The outside of the cup-shaped first housing part (101) is covered with a layer of nickel.

10. Battery (100) according to any of Claims 5 to 9, **characterized by** at least one of the following additional features:
a. The second housing part (102) likewise has a cup-shaped configuration.
b. The battery (100) is a button cell.

## Revendications

1. Procédé de fabrication d'une batterie (100) présentant les caractéristiques suivantes :
a. elle comprend un boîtier (101, 102) qui renferme un espace intérieur (111), et
b. elle comprend un corps composite (104) disposé dans l'espace intérieur (111) et qui comprend au moins une électrode positive (106), au moins une électrode négative (105) et au moins un séparateur (112),
ainsi que les caractéristiques supplémentaires suivantes :
c. le boîtier comprend une première partie de boîtier métallique en forme de timbale (101) et une deuxième partie de boîtier métallique (102),
d. la première partie de boîtier en forme de timbale (101) comprend un fond circulaire ou ovale (101a),
e. la première partie de boîtier en forme de timbale (101) comprend une surface latérale annulaire (101b),
f. le fond (101a) et la surface latérale (101b) de la première partie de boîtier en forme de timbale (101) comportent chacun un côté intérieur orienté vers l'espace intérieur et un côté extérieur orienté dans la direction opposée, et
g. le corps composite (104) comprend un conducteur de courant (107) qui relie électriquement l'au moins une électrode positive (106) ou l'au moins une électrode négative (105) à la première partie de boîtier en forme de timbale (101),
le procédé comprenant les étapes suivantes :
h. recouvrir le côté intérieur du fond (101a) de la première partie de boîtier en forme de timbale (101) avec un couvercle électriquement conducteur (109),
i. relier électriquement le couvercle (109) au fond (101a) par soudage,
j. relier électriquement le conducteur de courant (107) au couvercle (109) par soudage, et
k. assembler la première partie de boîtier (101) et la deuxième partie de boîtier (102) pour former le boîtier de la batterie (100), incluant le corps composite (104) dans l'espace intérieur (111).

2. Procédé selon la revendication 1, **caractérisé par** au moins une des étapes supplémentaires suivantes :
a. le couvercle (109) utilisé comprend de l'aluminium, du chrome, de l'étain ou un alliage de ces éléments comme composant électriquement conducteur,
b. le couvercle (109) utilisé est en aluminium, en chrome, en étain ou en l'alliage de ces éléments,
c. le couvercle (109) utilisé comprend un noyau en matière synthétique et un revêtement en aluminium, en chrome, en étain ou en l'alliage de ces éléments.

3. Procédé selon la revendication 1 ou la revendication 2, **caractérisé par** au moins une des étapes supplémentaires suivantes :
a. le couvercle (109) utilisé recouvre le fond (101a) par zones ou totalement,
b. le couvercle (109) utilisé est conçu sous la forme d'un disque,
c. le couvercle (109) utilisé est conçu de manière à protéger le fond (101a) de l'électrolyte situé dans l'espace intérieur (111).

4. Procédé selon l'une des revendications précédentes, **caractérisé par** au moins une des étapes supplémentaires suivantes :
a. la liaison électrique du conducteur électrique (107) au couvercle (109) par soudage est effectuée avant que le fond (101a) ne soit recouvert par le couvercle électriquement conducteur (109),
b. la liaison électrique du couvercle (109) au fond (101a) est effectuée par soudage après que la première partie de boîtier (101) et la deuxième partie de boîtier (102) ont été assemblées pour former le boîtier de la batterie (100).

5. Batterie (100) présentant les caractéristiques suivantes :
a. elle comprend un boîtier (101, 102) qui renferme un espace intérieur (111), et
b. elle comprend un corps composite (104) qui est disposé dans l'espace intérieur (111) et qui comprend au moins une électrode positive (106), au moins une électrode négative (105) et au moins un séparateur (112),
ainsi que les caractéristiques supplémentaires suivantes :
c. le boîtier comprend une première partie de boîtier métallique en forme de timbale (101) et une deuxième partie de boîtier métallique (102),
d. la première partie de boîtier en forme de timbale (101) comprend un fond circulaire ou ovale (101a),
e. la première partie de boîtier en forme de timbale (101) comprend une surface latérale annulaire (101b),
f. le fond (101a) et la surface latérale (101b) de la première partie de boîtier en forme de timbale (101) comportent chacun un côté intérieur orienté vers l'espace intérieur et un côté extérieur orienté dans la direction opposée, et
g. le corps composite (104) comprend un conducteur de courant (107) qui relie électriquement l'au moins une électrode positive (106) ou l'au moins une électrode négative (105) à la première partie de boîtier en forme de timbale,
h. le côté intérieur du fond (101a) de la première partie de boîtier en forme de timbale (101) étant recouvert d'un couvercle électriquement conducteur (109),
i. le couvercle (109) étant relié électriquement au fond (101a) par soudage, et
j. le conducteur de courant (107) étant relié électriquement au couvercle (109) par soudage.

6. Batterie (100) selon la revendication 5, **caractérisée par** l'une des caractéristiques supplémentaires suivantes :
a. le corps composite (104) comprend les électrodes (105, 106) sous une forme empilée ou enroulée,
b. les électrodes (105, 106) sont conçues pour pouvoir stocker et déstocker des ions lithium de manière réversible.

7. Batterie selon la revendication 5 ou la revendication 6, **caractérisée par** les caractéristiques supplémentaires suivantes :
a. la première partie de boîtier (101) est reliée électriquement à l'au moins une électrode positive (106),
b. le conducteur de courant (107) est en aluminium ou en un alliage d'aluminium,
c. le couvercle (109) utilisé est en aluminium ou en un alliage d'aluminium.

8. Batterie (100) selon l'une des revendications 5 à 7, **caractérisée par** les caractéristiques supplémentaires suivantes :
a. les électrodes (105, 106) comprennent chacune un collecteur de courant (107, 108) qui est partiellement recouvert d'un matériau actif,
b. le conducteur de courant (107) est une partie du collecteur de courant qui n'est pas recouverte du matériau actif.

9. Batterie (100) selon l'une des revendications 5 à 8, **caractérisée par** au moins une des caractéristiques supplémentaires suivantes :
a. la première partie de boîtier en forme de timbale (101) est en acier ou en acier spécial,
b. le côté extérieur de la première partie de boîtier en forme de timbale (101) est recouvert d'une couche de nickel.

10. Batterie (100) selon l'une des revendications 5 à 9, **caractérisée par** au moins une des caractéristiques supplémentaires suivantes :
a. la deuxième partie de boîtier (102) est également en forme de timbale,
b. la batterie (100) est une pile bouton.
